Europäisches Patentamt

European Patent Office

Office européen des brevets

(19)

(11) **EP 1 396 143 B1**

(12) **EUROPÄISCHE PATENTSCHRIFT**

(45) Veröffentlichungstag und Bekanntmachung des Hinweises auf die Patenterteilung:
**31.08.2005 Patentblatt 2005/35**

(21) Anmeldenummer: 02737837.1

(22) Anmeldetag: **11.05.2002**

(51) Int Cl.⁷: $H04N\ 3/15$

(86) Internationale Anmeldenummer:
**PCT/DE2002/001706**

(87) Internationale Veröffentlichungsnummer:
**WO 2002/093904 (21.11.2002 Gazette 2002/47)**

(54) **SCHALTUNGSANORDNUNG, BILDSENSORVORRICHTUNG UND VERFAHREN ZUR REDUZIERUNG DES NACHZIEHEFFEKTS EINES BILDSENSORS**

CIRCUIT ARRANGEMENT, IMAGE SENSOR DEVICE AND METHOD FOR REDUCING THE SMEARING EFFECT ON AN IMAGE SENSOR

MONTAGE, DISPOSITIF DE DETECTION D'IMAGE ET PROCEDE SERVANT A REDUIRE L'EFFET DE REMANENCE D'UN DETECTEUR D'IMAGE

(84) Benannte Vertragsstaaten:
**DE FR GB IT**

(30) Priorität: **16.05.2001 DE 10123853**

(43) Veröffentlichungstag der Anmeldung:
**10.03.2004 Patentblatt 2004/11**

(73) Patentinhaber: **ROBERT BOSCH GMBH**
**70442 Stuttgart (DE)**

(72) Erfinder:
• **HENNO, Christiane**
**72070 Tübingen (DE)**

• **BAUER, Roger**
**72762 Reutlingen (DE)**
• **SEGER, Ulrich**
**71229 Warmbronn (DE)**
• **APEL, Uwe**
**72666 Neckartailfingen (DE)**

(56) Entgegenhaltungen:
EP-A- 0 856 989      WO-A-01/61990
DE-A- 19 907 972

## Beschreibung

Stand der Technik

Eine Bildsensorzelle bzw. eine Schaltungsanordnung für eine solche ist bereits aus der Druckschrift WO 97/02529 bekannt, die eine Schaltungsanordnung offenbart, die ein schnelles Auslesen der Bildinformation aus einer Bildzelle für einen Bildaufnehmerchip offenbart.

Eine Schaltungsanordnung mit den Merkmalen des Oberbegriffs des Anspruch 1 ist aus dem Dokument EP-A-0 856 989 bekannt.

Vorteile der Erfindung

Die erfindungsgemäße Schaltungsanordnung gemäß Anspruch 1 die Bildsensorvorrichtung gemäß Anspruch 7 und das Verfahren gemäß Anspruch 8 mit den Merkmalen der nebengeordneten Ansprüche haben demgegenüber den Vorteil, dass die erreichbare Auflösung von schnell wechselnden Szeneninhalten mit sehr hohen Helligkeitsunterschieden und der gleichzeitigen Darstellung von großen Helligkeitsunterschieden in einer Szene möglich wird. Solche großen Helligkeitsunterschiede bzw. schnelle Wechsel derselben ergeben sich beispielsweise durch die schnelle Blickwinkeländerungen des Videosensors (bei Kraftfahrzeugen beispielsweise durch das Einschwenken in Schatten bei Unterführungen) oder durch fremdbewegte helle Objekte, wie z.B. Autoscheinwerfer vor dunklem Hintergrund. Für den einzelnen Bildpunkt bedeutet dies, dass es keine Speicher- oder Langzeiteffekte geben darf. Die logarithmische Kompression des Intensitätssignals in der einzelnen Bildzelle ist aus der obengenannten Druckschrift WO 97/02529 bekannt. Dadurch werden die in der Szene auftretenden Kontrastunterschiede für unterschiedliche Beleuchtungssituationen trotz der Darstellung hoher Helligkeitsunterschiede konstant gehalten. Der hierdurch erreichbare große Dynamikumfang vereinfacht weiterhin den Systemaufbau, da Blenden- und Belichtungszeitregelung wegfallen. Nachteilig beim bekannten Stand der Technik ist, dass die logarithmische Kompression innerhalb der Bildzelle ein selbst einstellendes, intensitätsabhängiges Integrationsverhalten aufweist, das die Erfassung schnell veränderlicher Vorgänge bei geringer Beleuchtung beeinträchtigt. Dies ist bei der vorgeschlagenen Schaltungsanordnung und der vorgeschlagenen Bildsensorvorrichtung nicht der Fall, da hier durch eine Rückkopplungsschaltung eine in allen Betriebszuständen konstante Sperrspannung an der Fotodiode realisiert ist. Umladephänomene mit den störend hohen Zeitkonstanten entfallen damit.

Weiterhin ist von Vorteil, dass die Verbindung zwischen den Elektroden des Transistors und dem Verstärker geschaltet wird. Hierdurch ist es insbesondere möglich, dass ein Verstärker für eine Vielzahl von erfindungsgemäßen Schaltungsanordnungen benutzbar ist, wobei der Verstärker seriell nacheinander jeweils mit unterschiedlichen Schaltungsanordnungen niederohmig verbunden wird, so dass für die Auswertung bzw. das Auslesen der betrachteten Schaltungsanordnung der Verstärker benutzt wird.

Durch die in den Unteransprüchen aufgeführten Maßnahmen sind vorteilhafte Weiterbildungen und Verbesserungen der in den nebengeordneten Ansprüchen angegebenen Schaltungsanordnungen, der Bildsensorvorrichtung und des erfindungsgemäßen Verfahrens möglich.

Zeichnung

Ein Ausführungsbeispiel der Erfindung ist in der Zeichnung dargestellt und in der nachfolgenden Beschreibung näher erläutert. Es zeigen

Figur 1 ein Ersatzschaltbild eines in schwacher Inversion verschalteten CMOS-Transistors mit einer Fotodiode,

Figur 2 ein Prinzip-Schaltbild der der Erfindung zugrundeliegenden Schaltungsanordnung.

Figur 3 die Zusammenschaltung von mehreren der Erfindung zugrundeliegenden Schaltungsanordnungen in einer Spalte.

Beschreibung des Ausführungsbeispiels

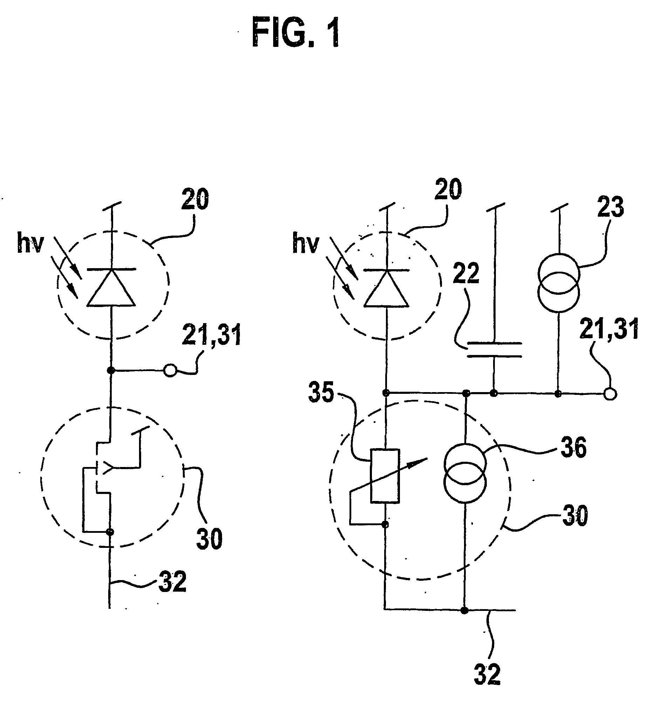

In Figur 1 ist das zentrale Sensorelement auf der linken Seite der Figur und das Ersatzschaltbild des zentralen Sensorelements auf der rechten Seite der Figur 1 dargestellt. Das zentrale Sensorelement umfaßt einen ersten Transistor 30, der erfindungsgemäß insbesondere als MOS-Transistor bzw. als CMOS-Transistors vorgesehen ist. Es sind erfindungsgemäß insbesondere p-Kanal-Transistoren, die in einer n-Wanne liegen, vorgesehen; n-Kanal-Typen sind jedoch erfindungsgemäß ebenso möglich. Bei der Verwendung von n-Kanal-Typen kehren sich die Spannungsbezeichnungen sowie die Richtung der angestrebten Spannungsverschiebungen entsprechend um. Der erste Transistor 30 umfaßt eine erste Elektrode 31 und eine zweite Elektrode 32. Weiterhin umfaßt das zentrale Sensorelement ein lichtempfindliches Element 20, welches erfindungsgemäß insbesondere als Fotodiode 20 vorgesehen ist. Die Fotodiode 20 umfaßt einen Anschluß 21, der mit der ersten Elektrode 31 des ersten Transistors 30 niederohmig verbunden ist. Auf der rechten Seite der Figur 1 ist das Ersatzschaltbild dieses zentralen Sensorelements dargestellt. Erkennbar ist wiederum der erste Transistor 30, und seine erste Elektrode 31 und seine zweite Elektrode 32 sowie die Fotodiode 20 mit ihrem einen Anschluß 21. Weiterhin ist in dem Ersatzschaltbild auf der rechten Seite der Figur 1 der Innenwiderstand 35 des ersten Transistors 30 abgebildet, über den ein konstantes Abführen (Constant Draining) des in der Fotodiode 20 generierten Stroms erfolgt. Dies ist durch die Stromquelle 36 im Ersatzschaltbild auf der rechten Seite der Figur 1 dargestellt. Weiterhin ist im Ersatzschaltbild die Sperrschichtkapazität 22 der Fotodiode 20 und die Stromquelle 23 für den Dunkelstrom der Fotodiode 20 dargestellt. Der Innenwiderstand 35 des ersten Transistors 30 ist abhängig von der Stromstärke 36 des durchgehend fließenden Stroms. Durch die Beschaltung des ersten Transistors im schwachen Inversionsbetrieb (Subthreshold-Bereich) wird der Fotostrom (Stromquelle 36) permanent über den Innenwiderstand 35 abgeleitet. Der Spannungsabfall über den Innenwiderstand 35 verändert sich proportional zum Logarithmus des Fotostroms 36. Das Umsetzungsverhältnis entspricht dem Subthreshold-Slope, was technologieabhängig circa 60-100 mV pro Dekade beträgt. Die untere Grenze des erfaßbaren Bereichs ist auch hier durch den Leckstrom der Diode, d.h. der durch die Stromquelle 23 verdeutlichten Dunkelstrom gegeben; die obere Grenze wird erreicht, wenn ein zu hoher Strom den ersten Transistor aus dem Subthreshold-Bereich drängt. Bei Raumtemperatur können mit einer solchen Beschaltung 6-7 Dekaden in der Lichtintensität erfaßt werden, so dass diese auswertbar sind.

Der Innenwiderstand 35 und die Sperrschichtkapazität 22 verursachen eine belichtungsabhängige Zeitkonstante, die insbesondere bei niedrigen Fotoströmen wegen des hierbei ansteigenden Widerstandswerts für den Innenwiderstand 35 die Ursache einer besonders großen Zeitkonstante ist, was sich besonders in dunklen Szenen auswirkt. Falls die zweite Elektrode 32 des ersten Transistors 30 auf Masse gelegt wird, ergibt sich hieraus ein zeitlich stark verzögertes Einschwingen auf den Dunkelausgangswert, wobei das Einschwenken bis zu einigen Sekunden dauern kann. Dies führt zu einem Kontrastverlust in dunklen bewegten Bildern. Die solchermaßen auf Masse gelegte zweite Elektrode 32 des ersten Transistors 30 bringt es daher mit sich, dass mit einem "inhärenten Integrationsverhalten" mit dem oben beschriebenen nachteiligen Zeitverhalten gerechnet werden muss. Alternativ hierzu wäre denkbar, den Aufbau einer Bildzelle mit einem im Subthreshold verschalteten Transistors durch einen mit großem und integrationshinderlichem Mehraufwand verbundenen extern kontrollierten Reset-Algorithmus auszustatten, was jedoch entweder integrationshinderlich ist oder durch den Reset-Betrieb zu zusätzlichen Artefakten führt.

Erfindungsgemäß wird ein anderer Weg beschritten, nämlich die Vorsehung einer Rückkopplungsschaltung, so dass eine in allen Betriebszuständen konstante Sperrspannung an der Fotodiode eingehalten wird, was Umladephänomene der Sperrschichtkapazität 22, die zu den störend hohen Zeitkonstanten führen, vermeidet. Die Knoten mit veränderlichen Potentialen werden durch einen Verstärker-Ausgang mit ausreichend niedriger Impedanz getrieben und sind ausreichend schnell. Erfindungsgemäß wird jedoch für eine Matrix von solchermaßen verschalteten Fotodioden nicht für jede Fotodiode ein eigener Verstärker vorgesehen, sondern es wird für eine ganze Gruppe von Fotodioden bzw. Bildzellen ein einziger Verstärker vorgesehen.

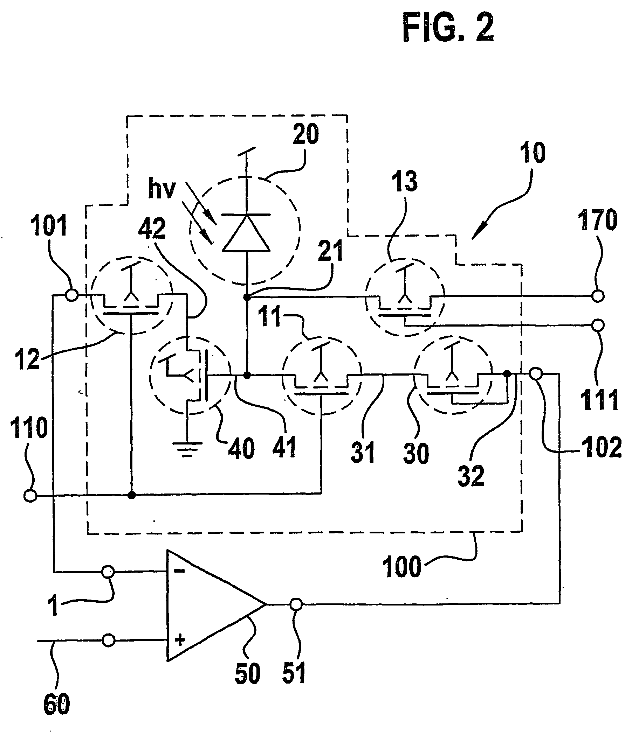

In Figur 2 ist eine solchermaßen ausgestaltete Schaltungsanordnung 10 dargestellt. Die Schaltungsanordnung 10 umfaßt das lichtempfindliche Element 20 bzw. die Fotodiode 20, den ersten Transistor 30 und einen zweiten Transistor 40. Der erste Transistor umfaßt eine erste Elektrode 31 und eine zweite Elektrode 32. Der zweite Transistor 40 umfaßt ebenfalls eine erste Elektrode 41 und eine zweite Elektrode 42. Die Fotodiode 20 bzw. das lichtempfindliche Element 20 umfaßt den Anschluß 21. Weiterhin umfaßt die Schaltungsanordnung 10 einen ersten weiteren Transistor 11, einen zweiten weiteren Transistor 12 und einen dritten weiteren Transistor 13, wobei die weiteren Transistoren 11, 12, 13 als Schalter vorgesehen sind. Der Anschluß 21 der Fotodiode 20 und die erste Elektrode 41 des zweiten Transistors 40 bilden zusammen einen Knoten, welcher auch als freie Elektrode der Fotodiode bezeichnet wird. Falls der erste weitere Transistor 11 durchgeschaltet ist, wird eine niederohmige Verbindung zwischen der ersten Elektrode 31 des ersten Transistors und der freien Elektrode der Fotodiode 20 hergestellt. In diesem Fall ergibt sich die im Zusammenhang mit Figur 1 beschriebene Verbindung zwischen der ersten Elektrode 31 des ersten Transistors 30 und der Fotozelle 20 bzw. ihres Anschlusses 21. Die Schaltungsanordnung 10 umfaßt weiterhin eine erste Bildzelle 100, die die Komponenten des gestrichelt eingezeichneten Bereichs 100 umfaßt. Die erste Bildzelle 100 hat einen ersten Anschluß 101, einen zweiten Anschluß 102, einen dritten Anschluß 110, einen vierten Anschluß 111 und einen fünften Anschluß 170. Der dritte Anschluß 110 der ersten Bildzelle 100 ist mit den Steuerelektroden sowohl des ersten weiteren Transistors 11 als auch des zweiten weiteren Transistors 12 verbunden, so dass bei einem entsprechenden Spannungszustand am dritte Anschluß 110 sowohl der erste weitere Transistor 11 als auch der zweite weitere Transistor 12 durchschaltet. Wenn der zweite weiteren Transistors 12 durchschaltet, wird eine niederohmige Verbindung zwischen der zweiten Elektrode 42 des zweiten Transistors 40 und dem ersten Anschluß 101 der ersten Bildzelle 100 hergestellt. Der vierte Anschluß 111 der Bildzelle 100 ist mit der Steuerelektrode des dritten weiteren Transistors 13 verbunden und ein entsprechender Spannungszustand am vierten Anschluß 111 der ersten Bildzelle 100 schaltet den dritten weiteren Transistor 13 durch, was eine niederohmige Verbindung zwischen dem fünften Anschluß 170 der ersten Bildzelle 100 und der freien Elektrode 21, 41 herstellt. Der zweite Anschluß 102 der ersten Bildzelle 100 ist mit der zweiten Elektrode 32 des ersten Transistors 30 niederohmig verbunden. Erfindungsgemäß ist die Schaltungsanordnung 10 derart vorgesehen, dass die zweite Elektrode 42 des zweiten Transistors 40 mit einem ersten Eingang 1 eines Verstärkers 50 niederohmig verbindbar ist. Dies wird erfindungsgemäß dadurch realisiert, dass zum einen der erste Anschluß 101 der ersten Bildzelle mit dem ersten Eingang 1 des Verstärkers 50 verbunden ist und dass eine niederohmige Verbindung zwischen dem ersten Anschluß 101 der ersten Bildzelle 100 und der zweiten Elektrode 42 des zweiten Transistors 40 durch das Durchschalten des zweiten weiteren Transistors 12, d.h. mittels eines entsprechenden Spannungspegels am dritten Anschluß 110 der ersten Bildzelle 100 erreicht wird. Weiterhin ist erfindungsgemäß der zweite Anschluß 102 der ersten Bildzelle 100 mit einem Ausgang 51 des Verstärkers 50 niederohmig verbunden. Der Verstärker 50 ist erfindungsgemäß insbesondere als Operationsverstärker vorgesehen, wobei sein erster Eingang 1 der invertierende Eingang des Operationsverstärkers 50 ist und wobei ein zweiter Eingang 60 des Verstärkers 50 vorgesehen ist, welcher, für den Fall, dass der Verstärker 50 als Operationsverstärker 50 vorgesehen ist, als nicht invertierender Eingang 60 vorgesehen ist und mit einer Referenzspannung beaufschlagt ist.

Durch die vergleichsweise große Struktur des Verstärkers 50 ist eine Realisierung von Verstärkern 50 für jede Bildzelle 100 für die Realisierung eines Bildsensors aus einer Vielzahl solcher Bildzellen nicht möglich. Daher wird erfindungsgemäß ein Verstärker 50 für jede Spalte einer in Zeilen und Spalten angeordneten Matrix von Bildzellen verwendet. Eine solche Spalte entspricht daher einer Gruppe von Bildzellen bzw. von Schaltungsanordnungen 10, für die jeweils ein Verstärker vorgesehen ist. Der Verstärker 50 ist als Rückkoppelverstärker vorgesehen, wobei die Rückkopplung jeweils für die aktuell ausgelesene Bildzelle bzw. auch Bildzeile aktiviert wird.

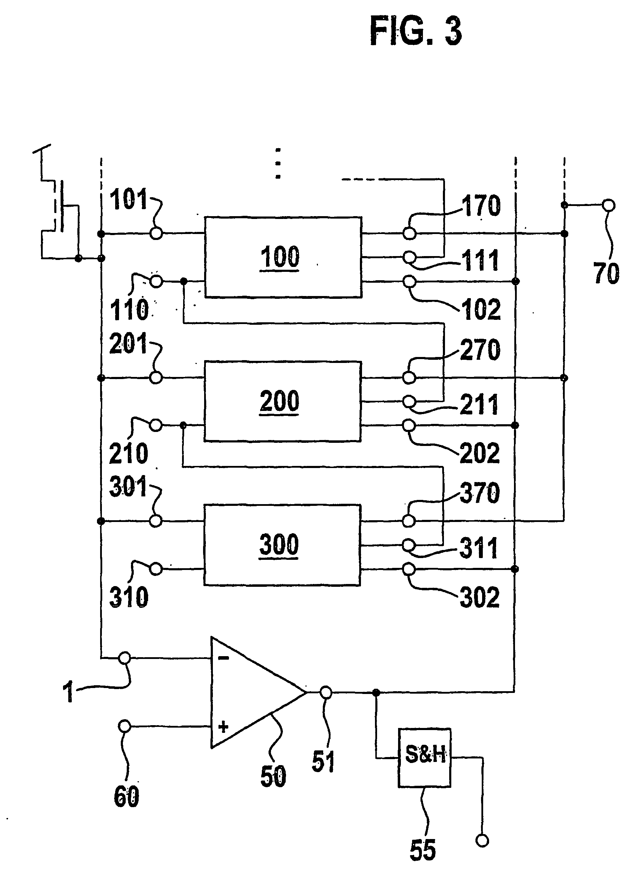

In Figur 3 ist eine Zusammenschaltung mehrerer erfindungsgemäßer Schaltungsanordnungen 10 in Form einer Spalte dargestellt. Hierbei ist die erste Bildzelle 100 lediglich noch schematisch mit ihren Anschlüssen 101, 102, 110, 111 und 170 dargestellt. Weiterhin ist eine zweite Bildzelle 200 und eine dritte Bildzelle 300 dargestellt, wobei die zweite Bildzelle 200 analog der ersten Bildzelle 100 einen ersten Anschluß 201, einen zweiten Anschluß 202, einen dritten Anschluß 210, einen vierten Anschluß 211 und einen fünften Anschluß 270 umfaßt. Ebenso umfaßt die dritte Bildzelle 300 entsprechend einen ersten Anschluß 301, einen zweiten Anschluß 302, einen dritten Anschluß 310, einen vierten Anschluß 311 und einen fünften Anschluß 370. Die drei Bildzellen 100, 200, 300 sind stellvertretend für eine Vielzahl von Bildzellen in der Anordnung von in einer Spalte zusammengeschalteten Zusammenschaltung von Schaltungsanordnungen 10 dargestellt. Weiterhin ist der Verstärker 50 als Operationsverstärker 50 mit seinem invertierendem ersten Eingang 1, seinem nicht-invertierenden zweiten Eingang 60 und seinem Ausgang 51 dargestellt. Entsprechend der ersten Bildzelle 100 sind die ersten Anschlüsse 101, 201, 301 der Bildzellen 100, 200, 300 mit dem invertierenden ersten Eingang 1 des Verstärkers 50 verbunden. Ebenso sind die zweiten Anschlüsse 102, 202, 302 der Bildzellen 100, 200, 300 mit dem Ausgang 51 des Verstärkers 50 verbunden.

Die Funktionsweise der Bildzellen 100, 200, 300 wird am Beispiel der ersten Bildzelle 100 im folgenden dargestellt. Mittels des dritten Anschlusses 110 der ersten Bildzelle 100 wird die erste Bildzelle 100 selektiert. Dies geschieht bei der Verwendung von p-Kanal MOS-Transistoren für die weiteren Transistoren 11, 12, 13 mittels eines Nullpegels am dritten Anschluß 110, der ersten Bildzelle 100. Hierdurch ist die zweite Elektrode 42 des zweiten Transistors 40 und die zweite Elektrode 32 des ersten Transistors 30 mit der zum gegenkoppelnden Verstärker 50 führenden Spaltenleitung frei. Die auf den invertierenden Eingang 1 des Verstärkers 50 geführte Spaltenleitung wird von der an der zweiten Elektrode 42 des zweiten Transistors 40 anliegenden Ausgangsspannung des als Source Follower betriebenen zweiten Transistors 40 getrieben, wobei die erste Elektrode 31 des zweiten Transistors 40, welche eine Gate-Elektrode ist, mit der freien Elektrode der Fotodiode 20 verbunden ist. Die Ausgangsspannung des der betrachteten Spalte zugeordneten Verstärkers 50 stellt sich so ein, dass die Spannungsdifferenz über den Eingängen 1, 60 des Verstärkers 50 verschwindet, das Potential in der dem ersten Anschluß 101 entsprechenden Leitung also dem extern definierbaren zeitlich konstanten Referenzspannungspegels entspricht, der am nicht invertierenden Eingang 60 des Verstärkers 50 anliegt. Das Potential der ersten Elektrode 41 des zweiten Transistors und - wegen der Durchschaltung des ersten weiteren Transistors 11 - auch das Potential der ersten Elektrode 31 des ersten Transistors 30 bzw. das Potential der freien Elektrode der Fotodiode 20 liegt damit entsprechend eine Schwellenspannung niedriger. Damit wird erreicht, dass die Scherspannung über der Fotodiode 20 konstant bleibt, zumindest für den Zeitraum, für den der Verstärker 50 mit den zweiten Elektroden 32, 42 verbunden ist, d.h. bei über den Verstärker 50 aktivierter Rückkopplung. Bei aktivierter Rückkopplung stellt sich das Potential an der zum zweiten Anschluß 102 der ersten Bildzelle 100 gehörenden Leitung für den Zeitraum der Auslesephase, d.h. der aktivierten Rückkopplung idealerweise so ein, dass die Source-Drain-Spannung über den im Subthreshold-Bereich arbeitenden ersten Transistor der Beziehung

$$V_{DS} = V_{TH} + V_{slope} * \log (I_{DS}/I_0)$$

Entspricht. Die Intensitätsinformation jedes einzelnen Pixels, d.h. jeder einzelnen Bildzelle 100, 200, 300 kann über eine Spaltenmuliplexer-Schaltung 55, die in Figur 3 dargestellt ist, ausgelesen werden. Sinnvollerweise wird hier je Spalte eine Sample&Hold (S&H-)Schaltung eingesetzt, um für alle Spalten eine gleich lange Zeitspanne für das Einschwingen auf die Knotenspannung zu ermöglichen, die durch den Photostrom definiert ist (Settlingphase). Für die hier vorgestellte Auslegung mit p-Kanal-Transistoren verändert sich die Ausgangsspannung des Rückkopplungsverstärkers proportional zum Logarithmus des Fotostroms gegen Ground. Typischerweise liegt die untere Grenze des Ausgangsspannungsbereichs des Rückkopplungsverstärkers oberhalb des Ground-Pegels, entsprechend liegt das Potential der freien Elektrode der Fotodiode 20 ausreichend hoch, um mit dem dritten weiteren Transistor 13, der erfindungsgemäß ebenfalls als p-Kanal-Transistor vorgesehen ist, eine genügend niederohmige Verbindung zu einer Rücksetzspannung, die an dem fünften Anschluß 170 der ersten Bildzelle bzw. an allen fünften Anschlüssen 170, 270, 370 über die anliegen am Anschluß 70 (in Figur 3 dargestellt) anliegt, herzustellen. Hierbei ist zu beachten, dass der Transistor nicht mehr als ausreichend niederohmiger Schalter einsetzbar ist, wenn die Source-Body-Vorspannung eines MOS-Transistors so hoch ist, dass keine effektive Gate-Spannung mehr aufgebaut werden kann. Die am nicht-invertierenden Eingang 60 des Verstärkers 50 anliegende Referenzspannung muss entsprechend eingestellt werden.

Wie oben beschrieben, wird die freie Elektrode der Fotodiode 20 nur solange spannungsmäßig stabil gehalten, wie die entsprechende Bildzelle 100, 200, 300 mittels der dritten Anschlüsse 110, 210, 310 adressiert ist und in die Rückkopplung einbezogen ist. Nach dem Auslesezyklus der Bildzelle 100, 200, 300 führt der Fotostrom zu einer Aufladung der Sperrschichtkapazität 22, vgl. Figur 1.

Erfindungsgemäß wird der Sachverhalt ausgenutzt, dass direkt vor dem nachfolgenden Auslesezyklus die freie Elektrode der Fotodiode 20 über den dritten weiteren Transistors 13, der günstig in die Bildzellenanordnung zu integrieren ist und ausreichend kurze Einstellzeiten auf die Rücksetzspannung aufweist, zurückgesetzt werden kann. Erfindungsgemäß ist es insbesondere vorgesehen, bei geeigneter geometrischer Anordnung der Transistorelemente die Zeilenauswahlschalter, d.h. die dem ersten weiteren Transistor 11 und dem zweiten weiteren Transistor 12 aus der ersten Bildzelle 100 in den Bildzellen 100, 200, 300 entsprechenden Transistoren, aus einer ersten Zeile mit den Rücksetzschaltern, d.h. der dem dritten weiteren Transistor 13 aus der Bildzelle 100 entsprechenden Transistoren aus den anderen Bildzellen 100, 200, 300, der nachfolgenden Zeile zusammengefügt werden. Damit kann im Vergleich zu einer eigenständig auszulegenden Rücksetzschaltung eine Metallisierungsbahn entfallen; bei identischem Pixelpitch, d.h. bei identischem Wiederholmaß der Bildzelle 100, 200, 300 kann somit eine größere aktive Fläche zur optischen Sensierung genutzt werden. Erfindungsgemäß wird daher in einem ersten Schritt eine Rücksetzung des lichtempfindlichen Elements 20 mittels einer Verbindung mit der Rücksetzspannung durchgeführt und es wird in einem zweiten Schritt, der zeitlich nachfolgt, die Verbindung zwischen den zweiten Elektroden 32, 42 mit dem Verstärker 50 hergestellt.

Erfindungsgemäß wird somit die Beschaltung und das Ausleseverfahren einer CMOS-Bildsensorzelle, die für den Betrieb in zweidimensional angeordneten Feldern, bzw. arrays, geeignet ist und in der eine logarithmisch komprimierende Stromspannungswandlung des Photostroms durchgeführt wird, wobei die Scherspannung an der freien Elektrode der Fotodiode 20 während der Auslesung konstant auf einem Spannungspegel gehalten wird, der bis auf eine Schwellenspannung der Referenzspannung entspricht. Die konstante Scherspannung über dem pn-Übergang der Fotodiode 20 vermeidet das für logarithmisch komprimierende CMOS-Bildsensoren bekannte verzögerte Entladen der Sperrschichtkapazität 22 nach einem einfallenden Lichtpuls, der sich in der bildhaften Wiedergabe als Kometenschweif oder "nachziehendes" Ende des Lichtpunktes äußert. Die Stabilisierung der Dioden-Sperrschichtspannung wird über die Rückkoppelschaltung eines je Spalte eines Bildsensor-Arrays angelegten Verstärkers 50 bewirkt. Dieser kann jedoch zu einem Zeitpunkt nur eine einzige Bildzelle 100, 200, 300 einer Spalte spannungsmäßig einstellen, die Potentiale an den pn-Übergängen der verbleibenden Bildzellen 100, 200, 300 stellen sich frei ein. Erfindungsgemäß wird daher mit einem auf die Steuerelektroden der dritten weiteren Transistoren 13 der jeweiligen Bildzellen angelegten Rücksetzimpuls, der sich zeitlich einen Zeilentakt vor der Auslesung der Zeile befindet, das Potential an den pn-Übergängen auf den stabilisierten Spannungswert der Rücksetzspannung nachgeführt. Nach dem Zeilenwechsel erfolgt die Spannungsnachführung am pn-Übergang der Fotodiode 20 über den im Subthreshold-Betrieb operierenden ersten Transistor durch den der Spalte zugeordneten Verstärker 50.

**Patentansprüche**

1.　Schaltungsanordnung (10) für eine Sensorzelle mit einem lichtempfindlichen Element (20), mit einem ersten Transistor (30) und mit einem zweiten Transistor (40), wobei ein Anschluß (21) des lichtempfindlichen Elements (20) mit einer ersten Elektrode (31) des ersten Transistors (30) verbindbar und mit einer ersten Elektrode (41) des zweiten Transistors (40) verbunden ist, wobei eine zweite Elektrode (42) des zweiten Transistors (40) mit einem ersten Eingang (1) eines Verstärkers (50) verbindbar ist und dass eine zweite Elektrode (32) des ersten Transistors (30) mit einem Ausgang (51) des Verstärkers (50) verbindbar ist, wobei durch eine Verbindung der zweiten Elektroden (42, 32) mit dem Verstärker (50) eine Rückkopplung herstellbar ist, **dadurch gekennzeichnet, dass** die erste Elektrode (41) des zweiten Transistors (40) mit einer Rücksetzspannung verbindbar ist, wobei die Verbindung mit der Rücksetzspannung zeitlich vor der Verbindung mit dem Verstärker (50) vorsehbar ist.

2. Schaltungsanordnung nach Anspruch 1, **dadurch gekennzeichnet, dass** die Verbindung zwischen den zweiten Elektroden (32, 42) und dem Verstärker (50) geschaltet wird.

3. Schaltungsanordnung (10) nach Anspruch 2, **dadurch gekennzeichnet, dass** zur Schaltung der Verbindung in der Schaltungsanordnung (10) wenigstens ein erster weiterer Transistor (11) und ein zweiter weiterer Transistor (12) vorgesehen ist.

4. Schaltungsanordnung (10) nach einem der vorhergehenden Ansprüche, **dadurch gekennzeichnet, dass** als Verstärker (50). ein Operationsverstärker (50) vorgesehen ist, wobei die zweite Elektrode (42) des zweiten Transistors (40) mit dem invertierenden ersten Eingang (1) des Verstärkers (50) verbindbar ist und wobei am nicht invertierenden zweiten Eingang (60) des Verstärkers (50) eine Referenzspannung anliegt.

5. Schaltungsanordnung (10) nach einem der vorhergehenden Ansprüche, **dadurch gekennzeichnet, dass** der erste und zweite Transistor (30, 40) als ein MOS-Transistor vorgesehen ist.

6. Schaltungsanordnung (10) nach einem der vorhergehenden Ansprüche, **dadurch gekennzeichnet, dass** das lichtempfindliche Element (20) als eine Fotodiode (20) vorgesehen ist.

7. Bildsensorvorrichtung mit einer Vielzahl von Schaltungsanordnungen (10) nach einem der vorhergehenden Ansprüche, **dadurch gekennzeichnet, dass** die Schaltungsanordnungen (10) in Gruppen angeordnet sind, wobei für jede Gruppe von Schaltungsanordnungen (10) ein Verstärker (50) vorgesehen ist.

8. Verfahren zum Auslesen eines Signals des lichtempfindlichen Elements (20) aus einer Schaltungsanordnung (10) gemäß einem der Ansprüche 1-7, **dadurch gekennzeichnet, dass** in einem ersten Schritt eine Rücksetzung des lichtempfindlichen Elements (20) mittels einer Verbindung mit der Rücksetzspannung durchgeführt wird und dass in einem zweiten, zeitlich nachfolgenden Schritt die Verbindung zwischen den zweiten Elektroden (32, 42) mit dem Verstärker (50) hergestellt wird.

**Claims**

1. Circuit arrangement (10) for a sensor cell having a light-sensitive element (20), having a first transistor (30), and having a second transistor (40), a terminal (21) of the light-sensitive element (20) being able to be connected to a first electrode (31) of the first transistor (30) and being connected to a first electrode (41) of the second transistor (40), a second electrode (42) of the second transistor (40) being able to be connected to a first input (1) of an amplifier (50), and a second electrode (32) of the first transistor (30) being able to be connected to an output (51) of the amplifier (50), and it being possible to establish feedback by connecting the second electrodes (42, 32) to the amplifier (50), **characterized in that** the first electrode (41) of the second transistor (40) can be connected to a reset voltage, it being possible to provide the connection to the reset voltage temporally before the connection to the amplifier (50).

2. Circuit arrangement according to Claim 1, **characterized in that** the connection between the second electrodes (32, 42) and the amplifier (50) is switched.

3. Circuit arrangement (10) according to Claim 2, **characterized in that** at least one first further transistor (11) and one second further transistor (12) are provided in order to switch the connection in the circuit arrangement (10).

4. Circuit arrangement (10) according to one of the preceding claims, **characterized in that** an operational amplifier (50) is provided as the amplifier (50), the second electrode (42) of the second transistor (40) being able to be connected to the inverting first input (1) of the amplifier (50), and a reference voltage being applied to the non-inverting second input (60) of the amplifier (50).

5. Circuit arrangement (10) according to one of the preceding claims, **characterized in that** the first and second transistors (30, 40) are provided in the form of MOS transistors.

6. Circuit arrangement (10) according to one of the preceding claims, **characterized in that** the light-sensitive element (20) is provided in the form of a photodiode (20).

7. Image sensor device having a multiplicity of circuit arrangements (10) according to one of the preceding claims, **characterized in that** the circuit arrangements (10) are arranged in groups, one amplifier (50) being provided for each group of circuit arrangements (10).

**8.** Method for reading a signal of the light-sensitive element (20) out of a circuit arrangement (10) according to one of Claims 1-7, **characterized in that**, in a first step, the light-sensitive element (20) is reset by being connected to the reset voltage, and **in that**, in a second step that follows in terms of time, the second electrodes (32, 42) are connected to the amplifier (50).

**Revendications**

**1.** Circuit (10) pour une cellule de capteur comportant

- un élément photosensible (20),
- un premier transistor (30) et
- un deuxième transistor (40),

dans lequel une borne (21) de l'élément photosensible (20) peut être reliée à une première électrode (31) du premier transistor (30) et est reliée à une première électrode (41) du deuxième transistor (40), une deuxième électrode (42) du deuxième transistor (40) peut être reliée à une première entrée (1) d'un amplificateur (50) et une deuxième électrode (32) du premier transistor (30) peut être reliée à une sortie (51) d'un amplificateur (50), une rétroaction pouvant être produite par une liaison des deuxièmes électrodes (42, 52) à l'amplificateur (50),
**caractérisé en ce que**
la première électrode (41) du deuxième transistor (40) peut être reliée à une tension de réinitialisation, la liaison à la tension de réinitialisation pouvant avoir lieu avant la liaison à l'amplificateur (50).

**2.** Circuit (10) selon la revendication 1,
**caractérisé en ce que**
la liaison entre les deuxièmes électrodes (32, 42) et l'amplificateur (50) est commutée.

**3.** Circuit (10) selon la revendication 2,
**caractérisé en ce que**
pour commuter la liaison dans le circuit (10), on prévoit au moins un autre premier transistor (11) et un autre deuxième transistor (12).

**4.** Circuit (10) selon l'une des revendications précédentes,
**caractérisé en ce que**
un amplificateur opérationnel (50) sert d'amplificateur (50), la deuxième électrode (42) du deuxième transistor (40) pouvant être reliée à la première entrée (1) - à effet inverseur - de l'amplificateur (50) et une tension de référence étant appliquée à la deuxième entrée (60) - sans effet inverseur - de l'amplificateur (50).

**5.** Circuit (10) selon l'une des revendications précédentes,
**caractérisé en ce que**
le premier et le deuxième transistor (30, 40) sont des transistors MOS.

**6.** Circuit (10) selon l'une des revendications précédentes,
**caractérisé en ce que**
l'élément photosensible (20) est une photodiode (20).

**7.** Dispositif capteur d'image comportant un grand nombre de circuits (10) selon l'une des revendications précédentes,
**caractérisé en ce que**
les circuits (10) sont disposés en groupes, un amplificateur (50) étant prévu pour chaque groupe de circuits (10).

**8.** Procédé pour extraire d'un circuit (10) selon l'une des revendications 1 à 7 un signal de l'élément photosensible (20),
**caractérisé en ce que**
dans une première étape l'élément photosensible (20) est réinitialisé à l'aide d'une liaison à la tension de réinitialisation,
et dans une deuxième étape réalisée par la suite la liaison est établie entre les deuxièmes électrodes (32, 42) et l'amplificateur (50).

# FIG. 1

# FIG. 2

# FIG. 3